# EUROPÄISCHE PATENTSCHRIFT

(11) **EP 4 505 248 B1**
(45) Veröffentlichungstag und Bekanntmachung des Hinweises auf die Patenterteilung: **29.04.2026**
(21) Anmeldenummer: 23717487.5
(22) Anmeldetag: 04.04.2023
(51) Int. Cl.: G03B 17/56, B65G 1/00

(54) **KAMERAHALTER ZUR BEFESTIGUNG EINER KAMERA AN EINEM LAGERLIFT SOWIE LAGERLIFT MIT EINEM DERARTIGEN KAMERAHALTER**
CAMERA HOLDER FOR FASTENING A CAMERA TO A STORAGE LIFT, AND STORAGE LIFT HAVING A CAMERA HOLDER OF THIS TYPE
SUPPORT DE CAMÉRA POUR FIXER UNE CAMÉRA À UN MONTE-CHARGE, ET MONTE-CHARGE DOTÉ D'UN SUPPORT DE CAMÉRA DE CE TYPE

(30) Priorität: 05.04.2022 DE 102022108125
(43) Veröffentlichungstag der Anmeldung: 12.02.2025
(73) Patentinhaber: Hänel GmbH & Co. KG, 74177 Bad Friedrichshall (DE)
(72) Erfinder: GROSS, Martin, 74229 Oedheim (DE)
(74) Vertreter: Flügel Preissner Schober Seidel
(86) Internationale Anmeldenummer: PCT/EP2023/058818
(87) Internationale Veröffentlichungsnummer: WO 2023/194365

(56) Entgegenhaltungen:
- CN-A- 104 132 226
- DE-A1- 102010 028 956
- DE-A1- 102018 115 697
- KR-U- 20140 004 877
- US-A1- 2009 252 486
- US-A1- 2010 128 122
- US-A1- 2017 261 064
- US-A1- 2018 094 765

## Beschreibung

Die vorliegende Erfindung betrifft einen Kamerahalter zur Befestigung einer Kamera an einem Lagerlift. Des Weiteren betrifft die Erfindung einen Lagerlift zur Einlagerung von Lagergut mit einem derartigen Kamerahalter.

Ein Kamerahalter der eingangs genannten Art wird dazu verwendet, um eine Kamera, welche zur Erfassung von auf einem Lagergutträger angeordnetem Lagergut dient, im Bereich einer Entnahmestelle eines Lagerlifts anzuordnen. Bei einem bekannten Kamerahalter wird die Kamera auf einem Kugelgelenk montiert, wobei das Kugelgelenk über einen Winkelverbinder an der Oberseite der Entnahmestelle festgelegt wird. Die Fixierung der Kamera in einer Position erfolgt durch eine an dem Kugelgelenk befindliche Klemmschraube. Beim Anziehen der Klemmschraube kann sich die Kamera leicht verstellen. Zudem kann sich die Verbindung durch Vibrationen beim Betrieb des Lagerliftes lösen. Darüber hinaus ist zur Einstellung des Kugelgelenks und eines Objektivs der Kamera die Demontage eines Deckels erforderlich, der eine Öffnung zur Durchführung der Kamera an der Oberseite der Entnahmestelle abdeckt.

US 2017/0261064 A1 offenbart eine Dämpfungsvorrichtung zur Befestigung einer Kamera, die ein oberes Dämpfungsverbindungselement, ein unteres Dämpfungsverbindungselement, das dem oberen Dämpfungsverbindungselement gegenüberliegt und von diesem beabstandet ist, einen Stahlseildämpfer, der zwischen dem oberen Dämpfungsverbindungselement und dem unteren Dämpfungsverbindungselement angeordnet ist, und einen Tragedämpfer, der mit dem oberen Dämpfungsverbindungselement verbunden ist, umfasst. Zwei Enden des Stahlseildämpfers sind jeweils mit dem oberen Dämpfungsverbindungselement und dem unteren Dämpfungsverbindungselement verbunden.

US 2018/0094765 A1 zeigt eine Kamera, die ein Montagesystem mit einem Basisteil zur Befestigung der Kamera an einem anderen Objekt umfasst, wobei der Basisteil ein Paar von Hebeln umfasst, die übereinander angeordnet sind, um in der Ebene zu schwenken, um die Verbindung oder Trennung einer Befestigungsschnittstelle mit dem Montagesystem zu ermöglichen.US 2010/0128122 A1 offenbart ein Kamerasystem mit einem Kameraobjektivmodul, einem Schleifringverbinder und einem Schwenk-/Neigemechanismus. In einer Ausführung umfasst das Kamerasystem eine Leiterplatte, einen Schleifring mit einem Stator, der mit der Leiterplatte verbunden ist, und einem Rotor, der in Bezug auf den Stator drehbar ist, ein Kameraobjektivmodul und ein flexibles Flachkabel. Das Kamerasystem kann auch einen Antirotationsarm enthalten, der mit dem Rotor verbunden ist und in Kontakt mit einem ersten Ende des flexiblen Flachkabels steht. Der Antirotationsarm kann eine Verdrehung des flexiblen Flachkabels während des Schwenks des Kameraobjektivmoduls verhindern.

Des Weiteren zeigt KR 2014 0004877 U ein schwingungsdämpfendes Element, das in der Lage ist, die Schwingungen eines kardanischen Kameragehäuses, das an einem oberen Teil oder einem unteren Teil eines sich in mehrere Richtungen bewegenden Geräts, wie z.B. eines Rundfunkgeräts oder eines Multikopters, angebracht ist, wirksam zu blockieren, sowie einen schwingungsdämpfenden kardanischen Kameragehäusedämpfer.

Der vorliegenden Erfindung liegt die Aufgabe zugrunde, einen Kamerahalter sowie einen Lagerlift zu schaffen, die eine kostengünstige und vibrationssichere Montage sowie eine einfache Justage einer Kamera ermöglichen.

Zur Lösung der Aufgabe wird ein Kamerahalter mit den Merkmalen des Anspruchs 1 und ein Lagerlift mit den Merkmalen des Anspruchs 11 vorgeschlagen.

Vorteilhafte Ausgestaltungen des Kamerahalters und des Lagerliftes sind Gegenstand der jeweils abhängigen Ansprüche.

Gemäß einem ersten Aspekt der Erfindung wird ein Kamerahalter zur Befestigung einer Kamera an einem Lagerlift vorgeschlagen. Der erfindungsgemäße Kamerahalter weist eine Haltevorrichtung zur Befestigung der Kamera, eine Befestigungsvorrichtung zur Befestigung des Kamerahalters an dem Lagerlift, wenigstens ein Befestigungselement, das die Befestigungsvorrichtung mit der Haltevorrichtung verbindet und wenigstens ein Federelement, das zwischen der Haltevorrichtung und der Befestigungsvorrichtung angeordnet ist und das die Haltevorrichtung und die Befestigungsvorrichtung elastisch miteinander koppelt, auf, wobei die Befestigungsvorrichtung als eine Platte mit einer Öffnung zur Durchführung der Kamera ausgebildet ist, und wobei die Haltevorrichtung als eine Basisplatte ausgebildet ist, die eine Aussparung für die Kamera aufweist.

Der erfindungsgemäße Kamerahalter ermöglicht durch die Kombination von Befestigungselement und Federelement eine kostengünstige und vibrationssichere Montage und einfache Justage einer Kamera an einem Lagerlift. Weiterhin wird eine stufenlose Neigbarkeit der Kamera in mehreren Achsen erreicht.

In einer vorteilhaften Ausgestaltung ist der Kamerahalter in einer Entnahmestelle eines Lagerlifts, insbesondere an einer Oberseite einer Entnahmestelle eines Lagerliftes, angeordnet. Die Entnahmestelle wird auch als Entnahmeöffnung bezeichnet und dient der Zuführung und Entnahme von Lagergutträgern (Containern). Vorteilhaft werden die mit der Kamera erfassten Bilder werden in einer Lagergutverwaltung des Lagerliftes abgespeichert.

Die Haltevorrichtung und die Befestigungsvorrichtung können aus Metall oder aus Kunststoff, insbesondere faserverstärktem Kunststoff, hergestellt sein. Insbesondere sind die Haltevorrichtung und/oder die Befestigungsvorrichtung aus Stahl, insbesondere verzinktem Stahl.

Die Haltevorrichtung kann wenigstens ein Mittel aufweisen, das mit dem Befestigungselement zusammenwirkt, um die Haltevorrichtung mit der Befestigungsvorrichtung zu verbinden. So kann das Mittel eine Blindnietmutter oder eine Gewindebohrung sein.

Die Befestigungsvorrichtung kann eine Öffnung zur Durchführung der Kamera, insbesondere eines Objektivs der Kamera, aufweisen. Die Befestigungsvorrichtung kann mit einer Oberseite einer Entnahmestelle eines Lagerliftes verbunden sein.

Das Befestigungselement kann die Befestigungsvorrichtung und die Haltevorrichtung form-, kraft- und/oder stoffschlüssig miteinander verbinden. Das Befestigungselement kann ein Schraubenelement, insbesondere eine Zylinderschraube mit einem Innensechskant sein.

Das Federelement kann eine Schraubenfeder aus Metall oder ein Elastomerkörper sein.

Vorteilhaft umgibt das Federelement wenigstens einen Abschnitt des Befestigungselements. Wenn das Befestigungselement als eine Zylinderschraube und das Federelement als eine Schraubenfeder ausgebildet ist, dann umgibt die Schraubenfeder vorteilhaft die Zylinderschraube.

In einer vorteilhaften Ausgestaltung sind das Befestigungselement und das Federelement parallel zueinander angeordnet. Das heißt, wenn das Befestigungselement angezogen wird, dann übt gleichzeitig das Federelement eine Federkraft aus. Die Kombination aus Befestigungselement und Federelement ermöglicht eine Einstellbarkeit und Positionssicherung einer Kamera.

In einer vorteilhaften Ausgestaltung sind drei Befestigungselemente, die die Befestigungsvorrichtung mit der Haltevorrichtung verbinden, und drei Federelemente, die zwischen der Haltevorrichtung und der Befestigungsvorrichtung angeordnet sind, vorgesehen. Dadurch wird ein federgespanntes Dreibein zur vibrationssicheren Montage und einfachen Justage einer Kamera an einem Lagerlift geschaffen.

In einer vorteilhaften Ausgestaltung ist das Federelement eine Druckfeder. Eine Druckfeder ist als kostengünstiges Standardbauteil erhältlich. Die Druckfeder kann eine Schraubenfeder sein. Darüber hinaus kann die Druckfeder aus Metall oder Kunststoff bestehen.

In einer vorteilhaften Ausgestaltung ist das Befestigungselement eine Schraube, wobei ein Abschnitt eines Gewindes der Schraube vorteilhaft mit einem mikroverkapselten Klebstoff versehen ist. Infolge des mikroverkapselten Klebstoffes wird eine ausreichend feste und vibrationssichere Verbindung von Haltevorrichtung und Befestigungsvorrichtung geschaffen. Vorteilhaft ist die Schraube eine Zylinderschraube mit einem Innensechskant.

In einer vorteilhaften Ausgestaltung umgibt das Federelement das Befestigungselement. Dadurch wird eine Parallelschaltung von Federelement und Befestigungselement erzeugt.

In einer vorteilhaften Ausgestaltung weist die Befestigungsvorrichtung Langlöcher zur Aufnahme von Befestigungsschrauben auf, die mit der Oberseite der Entnahmestelle verschraubt sind. Die Langlöcher ermöglichen eine Rotation des Kamerahalters in einer Objektivachse. Bei einer vorteilhaften Ausführungsform weist das Befestigungselement vier Langlöcher auf, wobei in jedes Langloch eine Befestigungsschraube einsetzbar ist.

In einer vorteilhaften Ausgestaltung wird zum Verschrauben der Befestigungsvorrichtung mit dem Lagerlift zwischen der Befestigungsschraube, insbesondere einer Linsenkopfblechschraube mit Kreuzschlitz, und dem Befestigungselement wenigstens eine Beilagscheibe angeordnet. Vorteilhaft werden die Befestigungsschrauben mit einer Abdeckplatte einer Entnahmestelle eines Lagerliftes verschraubt.

Die Platte bildet einen Deckel, welcher an einer Oberseite einer Entnahmestelle des Lagerlifts, insbesondere an einer Abdeckplatte einer Entnahmestelle eines Lagerlifts, festlegbar ist. Die Platte kann eine Durchgangsöffnung zum Hindurchführen des Befestigungselementes aufweisen. Vorteilhaft weist die Platte drei Durchgangsöffnungen auf. Vorteilhaft weist die Platte Langlöcher zur Aufnahme von Befestigungsschrauben auf, die mit der Oberseite der Entnahmestelle verschraubt sind. Insbesondere kann die Platte vier Langlöcher aufweisen.

In einer vorteilhaften Ausgestaltung weist die Haltevorrichtung wenigstens eine Blindnietmutter auf, mit der das Befestigungselement zusammenwirkt. Zur Befestigung der Haltevorrichtung an der Befestigungsvorrichtung wird das als Schraubenelement, insbesondere das als Zylinderschraube mit Innensechskant, ausgebildete Befestigungselement durch die Durchgangsöffnung hindurchgeführt und in die Blindnietmutter eingeschraubt.

Die Basisplatte kann aus Metall oder Kunststoff, insbesondere faserverstärktem Kunststoff, bestehen.

In einer vorteilhaften Ausgestaltung ist eine Abdeckplatte mit einer Aussparung für die Kamera vorgesehen, die mit der Basisplatte über das Befestigungselement verbunden ist, wobei im verbundenen Zustand die Aussparungen eine Durchgangsöffnung zum Hindurchführen der Kamera bilden. Die Abdeckplatte kann aus Metall oder Kunststoff, insbesondere faserverstärktem Kunststoff, sein. Zum Verbinden der Abdeckplatte mit der Basisplatte kann die Abdeckplatte ein Durchgangsloch zum Hindurchführen des Befestigungselementes aufweisen. Vorteilhaft weist die Abdeckplatte zwei Durchgangslöcher auf.

In einer vorteilhaften Ausgestaltung weist die Haltevorrichtung ein abgewinkeltes Flanschelement zur Befestigung der Kamera auf. Vorteilhaft ist die Kamera mit dem Flanschelement verschraubt. Hierzu kann das Flanschelement eine Öffnung aufweisen, durch welches ein Schraubelement, insbesondere eine Zylinderschraube mit Innensechskant, hindurchführbar und in die Kamera, insbesondere einem Innengewinde eines Gehäuses einer Kamera, einschraubbar ist. Das Flanschelement kann senkrecht zu der als Basisplatte ausgebildeten Haltevorrichtung abragen.

In einer vorteilhaften Ausgestaltung ist zwischen dem Flanschelement und der Kamera wenigstens ein O-Ring angeordnet. Der O-Ring erhöht die Reibung zwischen der Kamera und der Haltevorrichtung, insbesondere dem abgewinkelten Flanschelement. Der O-Ring kann aus einem elastomeren Werkstoff bestehen.

Gemäß einem weiteren Aspekt wird ein Lagerlift zur Einlagerung von Lagergut vorgeschlagen. Der Lagerlift weist einen erfindungsgemäßen Kamerahalter und eine an dem Kamerahalter festgelegte Kamera auf.

In einer vorteilhaften Ausgestaltung ist der Kamerahalter an einer Oberseite einer Entnahmestelle des Lagerliftes angeordnet. Dadurch kann die Kamera Lagergut, das sich auf einem Lagergutträger befindet, erfassen.

Nachfolgend wird die Erfindung anhand eines Ausführungsbeispiels näher beschrieben, das in den Figuren schematisch dargestellt ist. Hierbei zeigen:
- Fig. 1: eine perspektivische Darstellung einer Entnahmestelle eines Lagerlifts mit einer an einem Kamerahalter festgelegten Kamera;
- Fig. 2: einen Vertikalschnitt durch die Entnahmestelle mit dem Kamerahalter und der Kamera von Fig. 1;
- Fig. 3: einen vergrößerten Ausschnitt des Vertikalschnitts von Fig. 2;
- Fig. 4: eine Explosionsdarstellung des Kamerahalters mit Kamera;
- Fig. 5: eine Seitenansicht der Kamera und des Kamerahalters; und
- Fig. 6: eine Draufsicht auf die Kamera und den Kamerahalter.

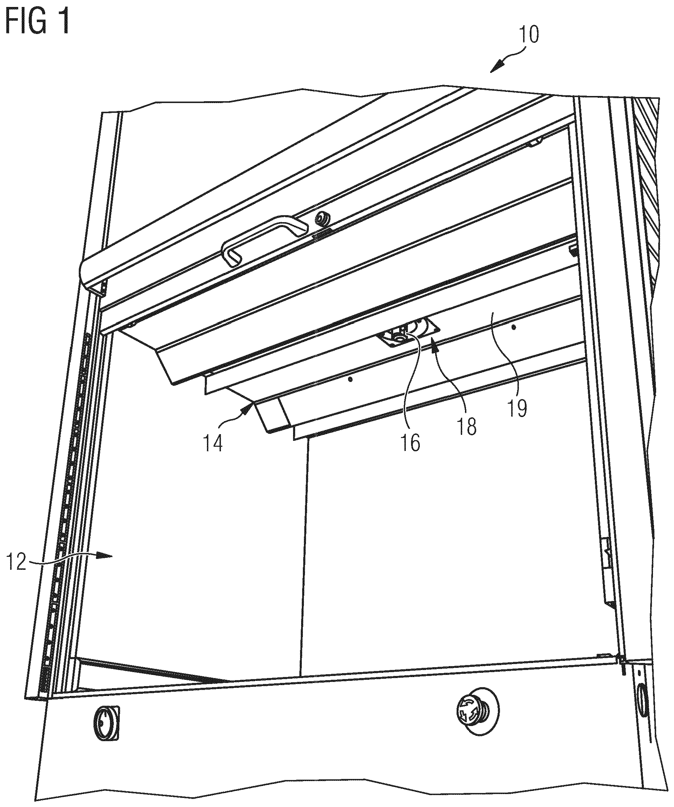

In Fig. 1 ist ein Lagerlift 10 mit einer Entnahmestelle 12 zur Ein- und Auslagerung von nicht dargestellten Lagergutträgern, auf denen Lagergut aufgenommen ist, gezeigt.

Zur Erfassung des auf einem Lagergutträger befindlichen Lagergutes ist an einer Oberseite 14 der Entnahmestelle 12 eine Kamera 16 angeordnet. Die mit der Kamera 16 erfassten Bilder werden in einer Lagergutverwaltung des Lagerliftes 10 abgespeichert.

Wie in den Figuren 1 bis 3 ersichtlich ist, wird die Kamera 16 mittels eines Kamerahalters 18 an der Oberseite 14 der Entnahmestelle 12 befestigt, wobei der Kamerahalter 18 an einer Abdeckung 19 der Entnahmestelle 12 befestigt ist.

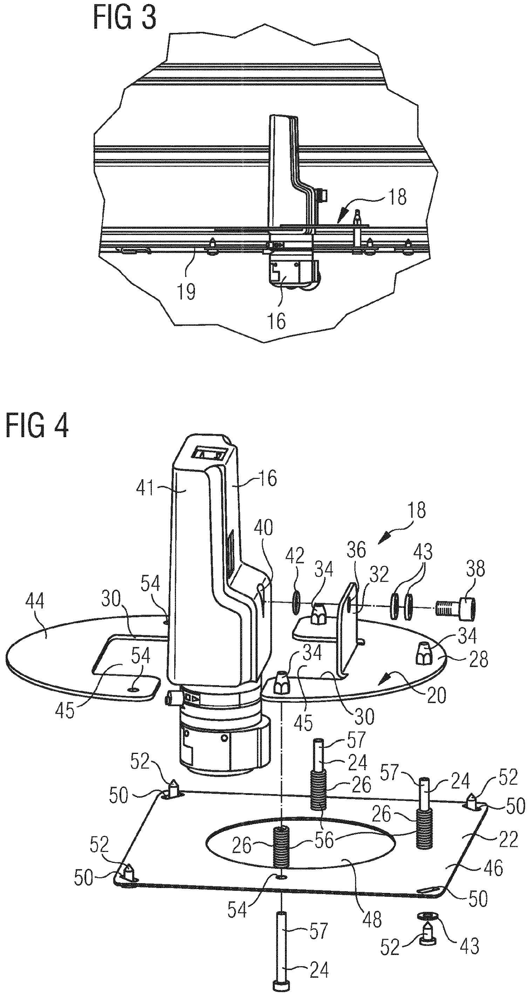

Der Kamerahalter 18 weist gemäß den Figuren 3 bis 6 eine Haltevorrichtung 20 zur Befestigung der Kamera 16, eine Befestigungsvorrichtung 22 zur Befestigung des Kamerahalters 18 an der Oberseite 14, drei Befestigungselemente 24, die die Befestigungsvorrichtung 22 mit der Haltevorrichtung 20 verbinden und drei Federelemente 26, die zwischen der Haltevorrichtung 20 und der Befestigungsvorrichtung 22 angeordnet sind und die die Haltevorrichtung 20 und die Befestigungsvorrichtung 22 elastisch miteinander koppeln, auf.

Wie insbesondere in Fig. 4 ersichtlich ist, weist die Haltevorrichtung 20 eine Basisplatte 28 auf, an der eine Aussparung 30 für die Kamera 16 vorgesehen ist. Die Basisplatte 28 ist halbkreisförmig und besteht aus Metall. Die Basisplatte 28 weist ein senkrecht abgewinkeltes Flanschelement 32 zur Befestigung der Kamera 16 und drei Blindnietmuttern 34 zum Einschrauben der Befestigungselemente 24 auf.

Zur Befestigung der Kamera 16 an dem abgewinkelten Flanschelement 32 weist dieses ein Loch 36 auf, in das eine Zylinderschraube 38 mit Innensechskant hindurchgeführt wird und in ein Innengewinde 40 eines Gehäuses 41 der Kamera 16 eingeschraubt wird.

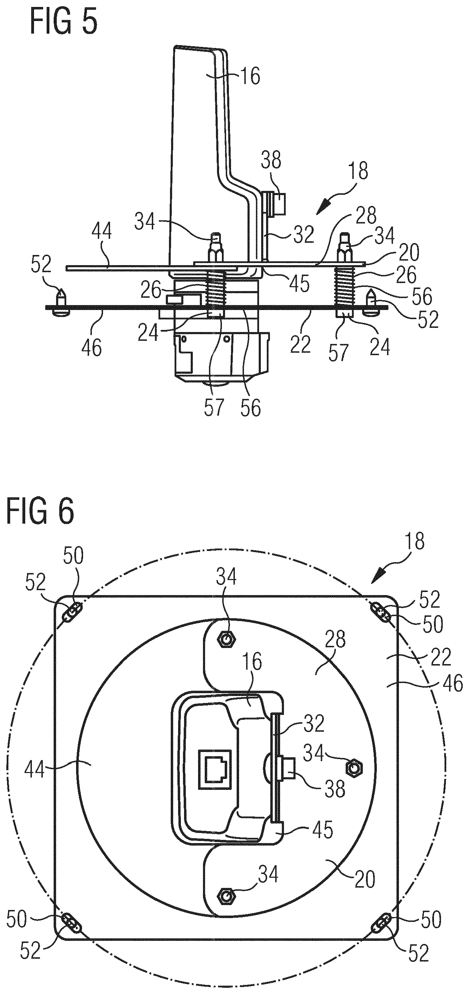

Wie in Fig. 4 und 6 ersichtlich ist, sind zwischen dem Flanschelement 32 und der Zylinderschraube 38 zwei Beilagscheiben 43 vorgesehen. Zur Erhöhung der Reibung ist zwischen dem Flanschelement 32 und der Kamera 16 ein O-Ring 42 aus elastomerem Material angeordnet.

Wie in Figur 3 ersichtlich, ist zudem eine halbkreisförmige Abdeckplatte 44 aus Metall vorgesehen, die eine Aussparung 30 für die Kamera 16 aufweist. Die Abdeckplatte 44 ist mit der Basisplatte 28 über die Befestigungselemente 24 verbunden. Im verbundenen Zustand bilden die Aussparungen 30 der Basisplatte 28 und die Aussparung der Abdeckplatte 44 eine Durchgangsöffnung 45 zum Hindurchführen der Kamera 16. Zum Verbinden der Abdeckplatte 44 mit der Basisplatte 28 weist die Abdeckplatte 44 zwei Durchgangslöcher 54 auf, durch die zwei Befestigungselemente 24 hindurchgeführt werden.

Die Befestigungsvorrichtung 22 ist als rechteckförmige Platte 46 aus Metall ausgebildet, die eine Öffnung 48 zur Durchführung der Kamera 16 aufweist.

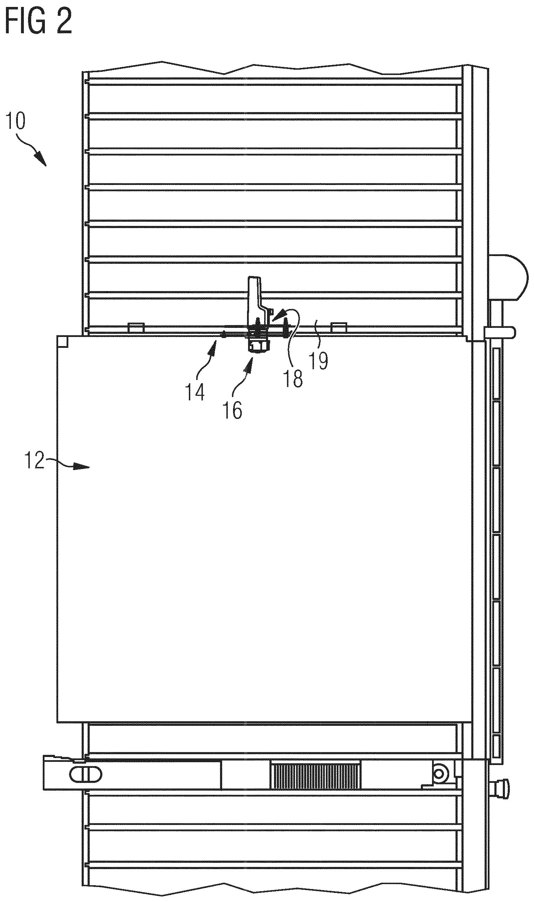

Über die Platte 46 wird der Kamerahalter 18 an der Abdeckung 19 der Entnahmestelle befestigt. Hierzu weist die Platte 46 vier Langlöcher 50 auf, in die Befestigungsschrauben 52 eingesetzt und die mit der Abdeckung 19 verschraubt werden, wie insbesondere in den Figuren 2 bis 4 ersichtlich ist. Zwischen den Befestigungsschrauben 52 und der Platte 46 ist jeweils eine Beilagscheibe 43 angeordnet. Über die Langlöcher 50 kann die Platte (46) samt Kamerahalter 18 und Kamera 16 verdreht werden, so dass eine Rotation des Kamerahalters 18 in Objektivachse ermöglicht wird.

Zum Verbinden der Platte 46 mit der Basisplatte 28, weist die Platte 46 drei Durchgangslöcher 54 auf, durch welche die Befestigungselemente 24 hindurchgeführt und in die Blindnietmuttern 34 eingeschraubt werden.

Die Befestigungselemente 24 sind als Zylinderschrauben 57 mit einem Innensechskant ausgebildet. Über die Zylinderschrauben 57 wird die Platte 46 und die Abdeckplatte mit der Basisplatte 28 verbunden, indem die Zylinderschrauben 57 durch die Durchgangslöcher 54 der Platte 56 und die Durchgangslöcher 54 der Abdeckplatte 44 hindurchgeführt und in die Blindnietmuttern 34 der Basisplatte 28 eingeschraubt werden. Die Zylinderschrauben 57, insbesondere ein Abschnitt ihres Gewindes, sind mit einem mikroverkapselten Klebstoff versehen. Hierdurch wird eine vibrationssichere Montage des Kamerahalters 18 ermöglicht.

Die Federelemente 26 sind vorliegend als Druckfedern 56 ausgebildet, die gemäß den Figuren 3 bis 5 zwischen der Abdeckplatte 44, der Basisplatte 28 und der Platte 56 angeordnet und von den Zylinderschrauben 57 durchdrungen sind.

Der Kamerahalter 18 ermöglicht durch die Kombination von Zylinderschrauben 38 und Druckfedern 56 eine kostengünstige und vibrationssichere Montage der Kamera 16. Weiterhin wird eine einfache Justage der Kamera 16 an der Abdeckung der Entnahmestelle 12 des Lagerlifts 10 mit einer stufenlosen Neigbarkeit der Kamera in mehreren Achsen ermöglicht. Der erfindungsgemäße Kamerahalter 18 kann leicht in vorhandene Lagerlifte nachgerüstet werden.

### Bezugszeichenliste

- 10: Lagerlift
- 12: Entnahmestelle
- 14: Oberseite
- 16: Kamera
- 18: Kamerahalter
- 19: Abdeckung
- 20: Haltevorrichtung
- 22: Befestigungsvorrichtung
- 24: Befestigungselement
- 26: Federelement
- 28: Basisplatte
- 30: Aussparung
- 32: abgewinkeltes Flanschelement
- 34: Blindnietmutter
- 36: Loch
- 38: Zylinderschraube
- 40: Innengewinde
- 41: Gehäuse
- 42: O-Ring
- 43: Beilagscheibe
- 44: Abdeckplatte
- 45: Durchgangsöffnung
- 46: Platte
- 48: Öffnung
- 50: Langloch
- 52: Befestigungsschraube
- 54: Durchgangsloch
- 56: Druckfeder
- 57: Zylinderschraube mit mikroverkapselten Klebstoff

## Patentansprüche

1. Kamerahalter (18) zur Befestigung einer Kamera (16) an einem Lagerlift (10), aufweisend eine Haltevorrichtung (20) zur Befestigung der Kamera (16), eine Befestigungsvorrichtung (22) zur Befestigung des Kamerahalters (18) an dem Lagerlift (10), wenigstens ein Befestigungselement (24), das die Befestigungsvorrichtung (22) mit der Haltevorrichtung (20) verbindet und wenigstens ein Federelement (26), das zwischen der Haltevorrichtung (20) und der Befestigungsvorrichtung (22) angeordnet ist und das die Haltevorrichtung (20) und die Befestigungsvorrichtung (22) elastisch miteinander koppelt,
**dadurch gekennzeichnet,**
**dass** die Befestigungsvorrichtung (22) als eine Platte (46) mit einer Öffnung (48) zur Durchführung der Kamera (16) ausgebildet ist, und
**dass** die Haltevorrichtung (20) als eine Basisplatte (28) ausgebildet ist, die eine Aussparung (30) für die Kamera (16) aufweist.

2. Kamerahalter (18) nach Anspruch 1, **dadurch gekennzeichnet, dass** das Federelement (26) wenigstens einen Abschnitt des Befestigungselements (24) umgibt.

3. Kamerahalter (18) nach Anspruch 1 oder 2, **dadurch gekennzeichnet, dass** drei Befestigungselemente (24), die die Befestigungsvorrichtung (22) mit der Haltevorrichtung (20) verbinden, und drei Federelemente (26), die zwischen der Haltevorrichtung (20) und der Befestigungsvorrichtung (22) angeordnet sind, vorgesehen sind.

4. Kamerahalter (18) nacheinem der vorhergehenden Ansprüche, **dadurch gekennzeichnet, dass** das Federelement (26) eine Druckfeder (56), insbesondere eine Schraubenfeder, ist.

5. Kamerahalter (18) nach einem der vorhergehenden Ansprüche, **dadurch gekennzeichnet, dass** das Befestigungselement (24) eine Schraube (57) ist, wobei ein Abschnitt eines Gewindes der Schraube (57) mit einem mikroverkapselten Klebstoff versehen ist.

6. Kamerahalter (18) nach einem der vorhergehenden Ansprüche, **dadurch gekennzeichnet, dass** die Befestigungsvorrichtung (22) Langlöcher (50) zur Aufnahme von Befestigungsschrauben (52) aufweist, die mit dem Lagerlift (10) verschraubbar sind.

7. Kamerahalter (18) nach einem der vorhergehenden Ansprüche, **dadurch gekennzeichnet, dass** die Haltevorrichtung (20) wenigstens eine Blindnietmutter (34) aufweist, mit der das Befestigungselement (24) zusammenwirkt.

8. Kamerahalter (18) nach einem der vorhergehenden Ansprüche, **dadurch gekennzeichnet, dass** eine Abdeckplatte (44) mit einer Aussparung (30) für die Kamera (16) vorgesehen ist, die mit der Basisplatte (28) über das Befestigungselement (24) verbunden ist, wobei im verbundenen Zustand die Aussparungen (30) eine Durchgangsöffnung (45) zum Hindurchführen der Kamera (16) bilden.

9. Kamerahalter (18) nach einem der vorhergehenden Ansprüche, **dadurch gekennzeichnet, dass** die Haltevorrichtung (20) ein abgewinkeltes Flanschelement (32) zur Befestigung der Kamera (16) aufweist.

10. Kamerahalter (18) nach Anspruch 9, **dadurch gekennzeichnet, dass** zwischen dem Flanschelement (32) und der Kamera (16) wenigstens ein O-Ring (42) angeordnet ist.

11. Lagerlift (10) zur Einlagerung von Lagergut, aufweisend einen Kamerahalter (18) nach einem der Ansprüche 1 bis 10 und eine an dem Kamerahalter (18) festgelegte Kamera (16).

12. Lagerlift nach Anspruch 11, **dadurch gekennzeichnet, dass** der Kamerahalter (18) an der Oberseite (14) einer Entnahmestelle (12) des Lagerliftes (10) angeordnet ist.

13. Lagerlift nach Anspruch 11 oder 12, **dadurch gekennzeichnet, dass** die Befestigungsvorrichtung (22) des Kamerahalters (18) an einer Abdeckung (19) der Entnahmestelle (12) befestigt ist.

## Claims

1. Camera holder (18) for attaching a camera (16) to a storage lift (10), comprising a holding device (20) for attaching the camera (16), a mounting device (22) for attaching the camera holder (18) to the storage lift (10), at least one fastening element (24) connecting the mounting device (22) to the holding device (20), and at least one spring element (26) arranged between the holding device (20) and the mounting device (22) and elastically coupling the holding device (20) and the mounting device (22) to one another,
**characterized in**
**that** the mounting device (22) is designed as a plate (46) with an opening (48) for passing the camera (16) through, and
**that** the holding device (20) is formed as a base plate (28) having a recess (30) for the camera (16).

2. Camera holder (18) according to claim 1, **characterized in that** the spring element (26) surrounds at least a portion of the fastening element (24).

3. Camera holder (18) according to claim 1 or 2, **characterized in that** three fastening elements (24) connecting the mounting device (22) to the holding device (20) and three spring elements (26) arranged between the holding device (20) and the mounting device (22) are provided.

4. Camera holder (18) according to one of the preceding claims, **characterized in that** the spring element (26) is a compression spring (56), in particular a coil spring.

5. Camera holder (18) according to one of the preceding claims, **characterized in that** the fastening element (24) is a screw (57), wherein a portion of the thread of the screw (57) is provided with a microencapsulated adhesive.

6. Camera holder (18) according to one of the preceding claims, **characterized in that** the mounting device (22) has slotted holes (50) for receiving fastening screws (52) that can be screwed into the storage lift (10).

7. Camera holder (18) according to one of the preceding claims, **characterized in that** the holding device (20) comprises at least one blind rivet nut (34) with which the fastening element (24) interacts.

8. Camera holder (18) according to one of the preceding claims, **characterized in that** a cover plate (44) with a recess (30) for the camera (16) is provided, which is connected to the base plate (28) via the fastening element (24), wherein, in the connected state, the recesses (30) form a through-opening (45) for passing the camera (16) therethrough.

9. Camera holder (18) according to any of the preceding claims, **characterized in that** the holding device (20) comprises an angled flange element (32) for securing the camera (16).

10. Camera holder (18) according to claim 9, **characterized in that** at least one O-ring (42) is arranged between the flange element (32) and the camera (16).

11. A storage lift (10) for storing goods, comprising a camera holder (18) according to any one of claims 1 to 10 and a camera (16) secured to the camera holder (18).

12. A storage lift according to claim 11, **characterized in that** the camera holder (18) is arranged on the top side (14) of a retrieval point (12) of the storage lift (10).

13. A storage lift according to claim 11 or 12, **characterized in that** the mounting device (22) of the camera holder (18) is attached to a cover (19) of the retrieval point (12).

## Revendications

1. Support de caméra (18) destiné à fixer une caméra (16) sur un ascenseur de stockage (10), comprenant un dispositif de maintien (20) pour fixer la caméra (16), un dispositif de fixation (22) pour fixer le support de caméra (18) sur l'ascenseur de stockage (10), au moins un élément de fixation (24) reliant le dispositif de fixation (22) au dispositif de maintien (20) et au moins un élément élastique (26) disposé entre le dispositif de maintien (20) et le dispositif de fixation (22) et couplant élastiquement le dispositif de maintien (20) et le dispositif de fixation (22) l'un à l'autre,
**caractérisé en ce**
**que** le dispositif de fixation (22) est réalisé sous la forme d'une plaque (46) comportant une ouverture (48) pour le passage de la caméra (16), et
en ce que le dispositif de maintien (20) est réalisé sous la forme d'une plaque de base (28) qui présente un évidement (30) pour la caméra (16).

2. Support de caméra (18) selon la revendication 1, **caractérisé en ce que** l'élément élastique (26) entoure au moins une partie de l'élément de fixation (24).

3. Support de caméra (18) selon la revendication 1 ou 2, **caractérisé en ce qu'**il est prévu trois éléments de fixation (24) reliant le dispositif de fixation (22) au dispositif de maintien (20) et trois éléments élastiques (26) disposés entre le dispositif de maintien (20) et le dispositif de fixation (22).

4. Support de caméra (18) selon l'une des revendications précédentes, **caractérisé en ce que** l'élément élastique (26) est un ressort de compression (56), en particulier un ressort hélicoïdal.

5. Support de caméra (18) selon l'une des revendications précédentes, **caractérisé en ce que** l'élément de fixation (24) est une vis (57), une partie du filetage de la vis (57) étant pourvue d'un adhésif micro-encapsulé.

6. Support de caméra (18) selon l'une des revendications précédentes, **caractérisé en ce que** le dispositif de fixation (22) comporte des trous oblongs (50) destinés à recevoir des vis de fixation (52) qui peuvent être vissées sur l'ascenseur de stockage (10).

7. Support de caméra (18) selon l'une des revendications précédentes, **caractérisé en ce que** le dispositif de maintien (20) comporte au moins un écrou à rivet aveugle (34) avec lequel l'élément de fixation (24) coopère.

8. Support de caméra (18) selon l'une des revendications précédentes, **caractérisé en ce qu'**une plaque de recouvrement (44) comportant un évidement (30) pour la caméra (16) est prévue, laquelle est reliée à la plaque de base (28) par l'intermédiaire de l'élément de fixation (24), les évidements (30) formant, à l'état assemblé, une ouverture de passage (45) pour le passage de la caméra (16).

9. Support de caméra (18) selon l'une des revendications précédentes, **caractérisé en ce que** le dispositif de maintien (20) comporte un élément de bride (32) destiné à la fixation de la caméra (16).

10. Support de caméra (18) selon la revendication 9, **caractérisé en ce qu'**au moins un joint torique (42) est disposé entre l'élément de bride (32) et la caméra (16).

11. Ascenseur de stockage (10) destiné au stockage de marchandises, comprenant un support de caméra (18) selon l'une des revendications 1 à 10 et une caméra (16) fixée au support de caméra (18).

12. Ascenseur de stockage selon la revendication 11, **caractérisé en ce que** le support de caméra (18) est disposé sur la face supérieure (14) d'un point de prélèvement (12) de l'ascenseur de stockage (10).

13. Ascenseur de stockage selon la revendication 11 ou 12, **caractérisé en ce que** le dispositif de fixation (22) du support de caméra (18) est fixé à un couvercle (19) du point de prélèvement (12).
